# EUROPEAN PATENT APPLICATION

(11) **EP 1 873 936 A1**
(43) Date of publication of application: **02.01.2008**
(21) Application number: 06730488.1
(22) Date of filing: 29.03.2006
(51) Int. Cl.: H04B 7/26, H04Q 7/36

(54) **TRANSMISSION POWER CONTROL METHOD AND MOBILE STATION**

(30) Priority: 29.03.2005 JP 2005127064
(71) Applicant: NTT DoCoMo INC., Chiyoda-ku Tokyo 100-6150 (JP)
(72) Inventor: USUDA, Masafumi Intellectual Property Department, Chiyoda-ku, Tokyo 100-6150 (JP); UMESH, Anil Intellectual Property Department, Chiyoda-ku, Tokyo 100-6150 (JP); NAKAMURA, Takehiro Intellectual Property Department, Chiyoda-ku, Tokyo 100-6150 (JP)
(74) Representative: HOFFMANN EITLE
(86) International application number: PCT/JP2006/306540
(87) International publication number: WO 2006/104211

(57) **Abstract**

The present invention enables to reduce deterioration in the radio network capacity on the E-DPCCH, by using the transmission power offset as small as possible while satisfying a quality of the E-DPCCH in a conventional mobile communication system using "EUL". The present invention relates to a transmission power control method for controlling a transmission power of an uplink control channel (E-DPCCH) at a mobile station UE, including: measuring, at a radio base station Node B, a reception quality of a control signal received through the uplink control channel (E-DPCCH); notifying, at the radio base station Node B, the measurement result to a radio network controller RNC; determining, at the radio network controller RNC, a transmission power offset of the uplink control channel (E-DPCCH) based on the measurement result and notifying the determined transmission power offset to the mobile station UE; and controlling, at the mobile station UE, the transmission power of the uplink control channel (E-DPCCH) by using the transmission power offset.

## Description

### [Technical Field]

The present invention relates to a transmission power control method and a mobile station for controlling a transmission power of an uplink control channel at the mobile station.

### [Background Art]

In a conventional mobile communication system, in an uplink from a mobile station UE to a radio base station Node B, a radio network controller RNC is configured to determine a transmission rate of a dedicated channel, in consideration of radio resources of the radio base station Node B, an interference volume in an uplink, a transmission power of the mobile station UE, transmission processing performance of the mobile station UE, a transmission rate required for an upper application, and the like, and to notify the determined transmission rate of the dedicated channel by a message in a layer-3 (Radio Resource Control Layer) to both of the mobile station UE and the radio base station Node B.

Here, the radio network controller RNC is provided at an upper level of the radio base station Node B, and is an apparatus configured to control the radio base station Node B and the mobile station UE.

In general, data communications often cause burst traffic compared with voice communications or TV communications. Therefore, it is preferable that a transmission rate of a channel used for the data communications is changed fast.

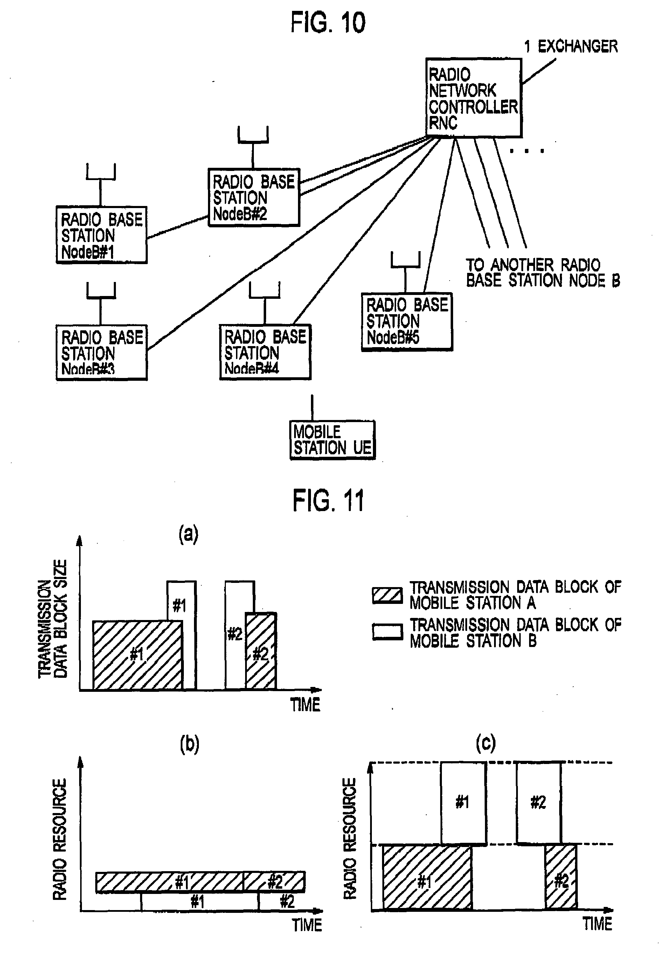

However, as shown in FIG. 10, the radio network controller RNC integrally controls a plurality of radio base stations Node B in general. Therefore. in the conventional mobile communication system, there has been a problem that it is difficult to perform fast control for changing of the transmission rate of the channel (for example, per approximately 1 through 100 ms), due to processing load, processing delay, or the like.

In addition, in the conventional mobile communication system, there has also been a problem that costs for implementing an apparatus and for operating a network are substantially increased even if the fast control for changing of the transmission rate of the channel can be performed.

Therefore, in the conventional mobile communication system, control for changing of the transmission rate of the channel is generally performed on the order from a few hundred ms to a few seconds.

Accordingly, in the conventional mobile communication system, when burst data transmission is performed as shown in FIG. 11(a), the data are transmitted by accepting low-speed, high-delay, and low-transmission efficiency as shown in FIG. 11 (b), or, as shown in FIG. 11(c), by reserving radio resources for high-speed communications to accept that radio bandwidth resources in an unoccupied state and hardware resources in the radio base station Node B are wasted.

It should be noted that both of the above-described radio bandwidth resources and hardware resources are applied to the vertical radio resources in FIG. 11.

Therefore, the 3rd Generation Partnership Project (3GPP) and the 3rd Generation Partnership Project 2 (3GPP2), which are international standardization organizations of the third generation mobile communication system, have discussed a method for controlling radio resources at high speed in a layer-1 and a media access control (MAC) sub-layer (a layer-2) between the radio base station Node B and the mobile station UE, so as to utilize the radio resources effectively. Such discussions or discussed functions will be hereinafter referred to as "Enhanced Uplink (EUL)".

Radio resource control methods that have been discussed in the "Enhanced Uplink" can be broadly categorized into three as follows. The radio resource control methods will be briefly described below.

First, a radio resource control method that is referred to as "Time & Rate Control" has been discussed.

In such a radio resource control method, a radio base station Node B determines a mobile station UE which can transmit user data and a transmission rate of the user data per a predetermined timing, so as to notify a mobile station ID as well as the information relating to the transmission rate of the user data (or a maximum allowable transmission rate of the user data).

The mobile station UE designated by the radio base station Node B transmits the user data at a designated timing and the transmission rate (or within a range of the maximum allowable transmission rate).

Second, a radio resource control method that is referred to as "Rate Control per UE" has been discussed.

In such a radio resource control method, if there is user data to be transmitted to the radio base station Node B, each mobile station UE can transmit the user data. However, regarding the maximum allowable transmission rate of the user data, the transmission rate determined by the radio base station Node B and notified to each mobile station UE for each transmission frame or each of a plurality of transmission frames, is used.

Here, when the maximum allowable transmission rate is notified, the radio base station Node B notifies the maximum allowable transmission rate itself at the timing or a relative value thereof (for example, an "Up command", a "Down command", and a "Hold command").

Third, a radio resource control method that is referred to as "Rate Control per Cell" has been discussed.

In such a radio resource control method, a radio base station Node B notifies a transmission rate of the user data, which is common among the mobile stations UE in communication, or information required to calculate the transmission rate, so that each mobile station UE determines the transmission rates of the user data based on the received information.

Ideally, the "Time & Rate Control", and the "Rate Control per UE" can be the best control methods for improving a radio capacity in an uplink. However, a transmission rate of the user data has to be granted after data volume stored in the buffers of the mobile station UE, the transmission power in the mobile station UE, or the like are grasped. Therefore, there has been a problem that control load is increased by the radio base station Node B.

In addition, in these radio resource control methods, there has been a problem that overhead becomes larger by exchanges of control signals.

On the other hand, in the "Rate Control per Cell", there is an advantage in that control load by the radio base station Node B is small since the radio base station Node B notifies information which is common in cells, and each mobile station UE autonomously seeks the transmission rate of the user data based on the received information.

However, the radio base station Node B has to be configured in such a manner that the user data in the uplink from any mobile station UE can be received. Therefore, there has been a problem that an apparatus size of the radio base station Node B becomes large to effectively utilize the radio capacity of the uplink.

Accordingly, there has been proposed, for example, a scheme (Autononous ramping method) that the mobile station UC increases the transmission rate of user data from a pre-notified initial transmission rate in accordance with predetermined rules so that excessive allocation of a radio capacity by the radio base station Node B can be prevented, thereby preventing increase of the apparatus size of radio base station Node B, as described in Non-patent Document 1.

In such a scheme, a radio base station Node B determines a maximum allowable transmission rate (or a parameter relating to the maximum allowable transmission rate, the same shall apply hereinafter) based on hardware resources or radio bandwidth resources (for example, an interference volume in an uplink) in each cell, so as to control the transmission rate of the user data in communicating mobile stations. Detailed descriptions of a control scheme based on hardware resources and a control scheme based on an interference volume in an uplink will be given below.

In the control scheme based on the hardware resources, a radio base station Node B is configured to notify a maximum allowable transmission rate to a mobile station UE connected to a cell under the control thereof.

The radio base station Node B lowers the maximum allowable transmission rate so as to avoid shortage of the hardware resources when the transmission rate of the user data in the mobile station UE connected to the cell under the control thereof is increased and the hardware resources are insufficient.

On the other hand, the radio base station Node B again increases the maximum allowable transmission rate when the space of the hardware resources becomes larger, such as when the user data transmission in the mobile station UE connected to the cell under the control thereof has been completed, or the like.

In addition, in the control scheme based on the interference volume in the uplink, a radio base station Node B is configured to notify a maximum allowable transmission rate to a mobile station UE connected to a cell under the control thereof.

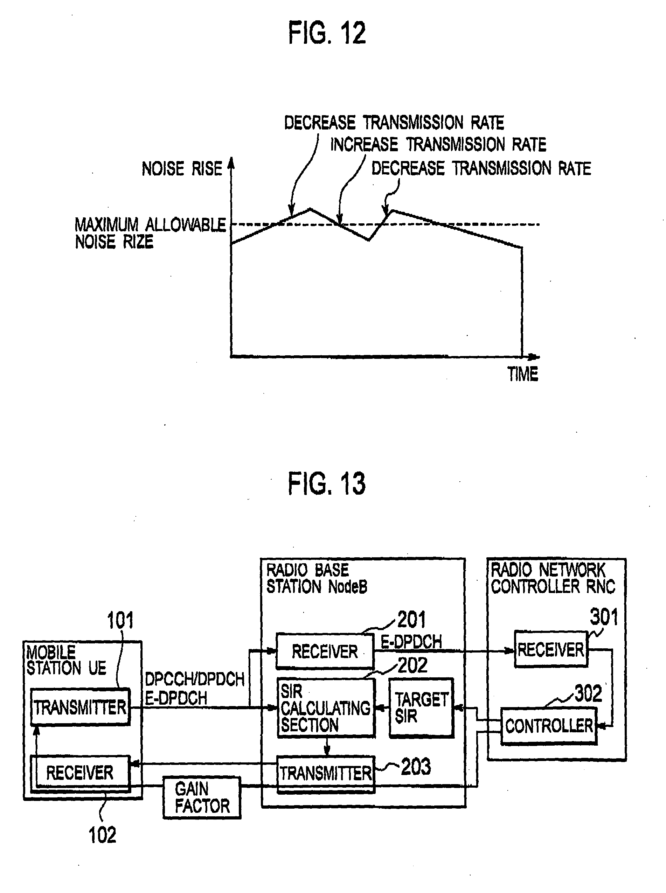

When the transmission rate of the user data in the mobile station UE connected to the cell under the control of the radio base station Node B increases and a measured interference volume (for example, a measured noise rise) in the uplink exceeds an allowable value (for example, a maximum allowable noise rise), the radio base station Node B lowers the maximum allowable transmission rate so that the interference volume in the uplink can be within a range of the allowable value (see, FIG. 12).

On the other hand, when the interference volume (for example, the noise rise) in the uplink is within a range of the allowable value (for example, the maximum allowable noise rise) thereby having a space, such as when the user data transmission in the mobile station UE connected to the cell under the control of the radio base station Node B has been completed, or the like, the radio base station Node B again increases the maximum allowable transmission rate (see, FIG. 12).

Further, a transmission power control in a mobile communication system using "EUL" will be described with reference to Fig. 13.

A transmitter 101 in the mobile station UE is configured to periodically transmit a Dedicated Physical Control Channel (DPCCH), to which a layer-1 control information such as a pilot signal, a TPC command or the like are mapped.

In addition, the transmitter 101 of the mobile station UE is configured to transmit a Dedicated Physical Data Channel (DPDCH) or an Enhanced Dedicated Physical Data Channel (E-DPDCH) to which the uplink user data or the control information in more than layer 2 are mapped, in accordance with presence or absence of uplink user data to be transmitted, or presence or absence of a transmission opportunity allocation.

An SIR calculating section 202 of the radio base station Node B calculates a reception signal to interference power ratio (a reception SIR) of the received DPCH, so as to compare the set target SIR with the reception SIR.

When the reception SIR is larger than the target SIR, a transmitter 203 of the radio base station Node B transmits a "Down" command to the mobile station UE. When the reception SIR is smaller than the target SIR, the transmitter 203 of the radio base station Node B transmits an "Up" command to the mobile station UE.

A series of operation described above is referred to as "inner loop transmission power control".

On the other hand, an input section 301 of the radio network controller RNC is configured to measure a reception quality of the E-DPDCH (or the DPDCH).

Then, a controller 302 of the radio network controller RNC is configured to set a target SIR of the radio base station Node B based on the measurement result, and to determine a transmission wave amplitude ratio between the E-DPDCH transmitted from the mobile station UE and the DPCCH (the above transmission amplitude ratio is hereinafter referred to as "gain factor"), so as to notify the determined gain factor to the mobile station UE.

A series of operation described above is referred to as "outer loop transmission power control".

In the conventional mobile communication system using "EUL", "outer loop transmission power control" can be adapted to various fluctuations in a radio environment, such as when the mobile station UE shifts to a soft handover status, when the transmission rate of the mobile station UE has changed, when the radio waves are interrupted by such as buildings, or the like.

On the other hand, the transmitter 101 of the mobile station UE is configured to transmit an E-DPCCH (uplink control channel) by a fixed transmission power offset (a transmission power ratio between the E-DPCCH and the DPCCH).

However, if user data to be transmitted through the E-DPDCH does not exist, only "inner loop transmission power control" is performed without "outer loop transmission power control". In such a case, the gain factor or the target SIR cannot be set appropriately in accordance with the propagation environment changing, thereby it is not possible to transmit uplink user data with an appropriate transmission power when the transmission is restarted. This causes a problem of deterioration in the radio quality.

In addition, data is transmitted by a fixed transmission power offset on the E-DPCCH, thereby the transmission power offset cannot be changed flexibly in accordance with the radio environment changing. This causes problem of deterioration in the radio network capacity.
(Non-patent Document 1) 3GPP TSG-RAN R2-042010

### [Disclosure of the Invention]

The present invention has been made considering the above-described problems, and its object is to provide a transmission power control method and a mobile station that makes it possible to reduce deterioration in the radio network capacity on the E-DPCCH, by using the transmission power offset as small as possible while satisfying a quality of the E-DPCCH in a conventional mobile communication system using "EUL".

A first aspect of the present invention is summarized as a transmission power control method for controlling a transmission power of an uplink control channel at a mobile station, including: measuring, at a radio base station, a reception quality of a control signal received through the uplink control channel; notifying, at the radio base station, the measurement result to a radio network controller; determining, at the radio network controller, a transmission power offset of the uplink control channel based on the measurement result, and notifying the determined transmission power offset to the mobile station; and controlling, at the mobile station, the transmission power of the uplink control channel by using the transmission power offset.

A second aspect of the present invention is summarized as a transmission power control method for controlling a transmission power of an uplink control channel at a mobile station, including: determining a transmission period of an outer loop transmission power control signal, and notifying the determined transmission period to the mobile station; transmitting, at the mobile station, the outer loop transmission power control signal in the determined transmission period through an uplink user data channel, even when uplink user data to be transmitted through the uplink user data channel does not exist; measuring, at a radio base station, a reception quality of the outer loop transmission power control signal received through the uplink user data channel; notifying, at the radio base station, the measurement result to a radio network controller; determining, at the radio network controller, a transmission power offset of the uplink control channel based on the measurement result, and notifying the determined transmission power offset to the mobile station; and controlling, at the mobile station, the transmission power of the uplink control channel by using the transmission power offset.

In the second aspect of the present invention, the radio network controller may determine the transmission period and notify the determined transmission period to the mobile station.

In the second aspect of the present invention, the radio network controller may determine the transmission period when the mobile station sets a call or when the mobile station starts a soft handover, and notify the determined transmission period to the mobile station.

In the second aspect of the present invention, the transmission period may be determined in accordance with a status of the mobile station or a congestion degree of a radio network.

A third aspect of the present invention is summarized as a mobile station which transmits an uplink control channel, including: an outer loop transmission power control signal transmitter configured to transmit an outer loop transmission power control signal through an uplink user data channel in a predetermined transmission period, even when uplink user data to be transmitted through the uplink user data channel does not exist; and a transmission power controller configured to control a transmission power of the uplink control channel by using a transmission power offset determined by using the outer loop transmission power control signal.

In the third aspect of the present invention, the radio network controller may determine the predetermine transmission period and notify the determined transmission period.

A fourth aspect of the present invention is summarized as a radio network controller, including: a transmission power offset determining section configured to determine a transmission power offset of the uplink control channel based on a measurement result of a reception quality of a control signal received through the uplink control channel, the measurement result notified from a radio base station, and to notify the determined transmission power offset to the mobile station.

A fifth aspect of the present invention is summarized as a radio network controller used in a transmission power control method for controlling a transmission power of an uplink control channel at a mobile station; including; a transmission period determining section configured to determine a transmission period of an outer loop transmission power control signal, and to notify the determined transmission period to the mobile station; and a transmission power offset determining section configured to determine a transmission power offset of the uplink control channel based on a measurement result of a reception quality of the outer loop transmission power control signal received through an uplink user data channel, the measurement result notified from a radio base station, and to notify the determined transmission power offset to the mobile station.

In the fifth aspect of the present invention, the transmission period determining section may determine the transmission period when the mobile station sets a call or when the mobile station starts a soft handover, and notify the determined transmission period to the mobile station.

In the fifth aspect of the present invention, the transmission determining section may determine the transmission period in accordance with a status of the mobile station or a congestion degree of a radio network, and notify the determined transmission period to the mobile station.

### [Brief Description of the Drawings]

[Fig. 1] Fig. 1 is a functional block diagram of a mobile station of a mobile communication system according to the first embodiment of the present invention.
[Fig. 2] Fig. 2 is a functional block diagram of a baseband signal processing section in a mobile station of the mobile communication system according to the first embodiment of the present invention.
[Fig. 3] Fig. 3 is a functional block diagram of a MAC-e processing section of the baseband signal processing section in a mobile station of the mobile communication system according to the first embodiment of the present invention.
[Fig. 4] Fig. 4 is a functional block diagram of a layer-1 processing section of the baseband signal processing section in a mobile station of the mobile communication system according to the first embodiment of the present invention.
[Fig. 5] Fig. 5 is a functional block diagram of a radio base station of the mobile communication system according to the first embodiment of the present invention.
[Fig. 6] Fig. 6 is a functional block diagram of a baseband signal processing section in a radio base station of the mobile communication system according to the first embodiment of the present invention.
[Fig. 7] Fig. 7 is a functional block diagram of a MAC-e and layer-1 processing section (configuration for uplink), of the baseband signal processing section in a radio base station of the mobile communication system according to the first embodiment of the present invention.
[Fig. 8] Fig.8 is a functional block diagram of a MAC-e functional section of the MAC-e and layer-1 processing section (configuration for uplink), of the baseband signal processing section in a radio base station of the mobile communication system according to the first embodiment of the present invention.
[Fig. 9] Fig. 9 is a functional block diagram of a radio network controller of the mobile communication system according to the first embodiment of the present invention.
[Fig. 10] Fig. 10 is a diagram showing an entire configuration of a general mobile communication system.
[Fig. 11] Figs. 11 (a) to 11(c) are graphs illustrating operations at the time of burst data transmission in a conventional mobile communication system.
[Fig. 12] Fig. 12 is a diagram for explaining an operation for controlling transmission rate In uplink in a conventional mobile communication system.
[Fig. 13] Fig. 13 is a diagram for explaining a transmission power control system in a conventional mobile communication system.

### [Best Mode for Carrying out the Invention]

### (Mobile Communication System According to First Embodiment of the Present Invention)

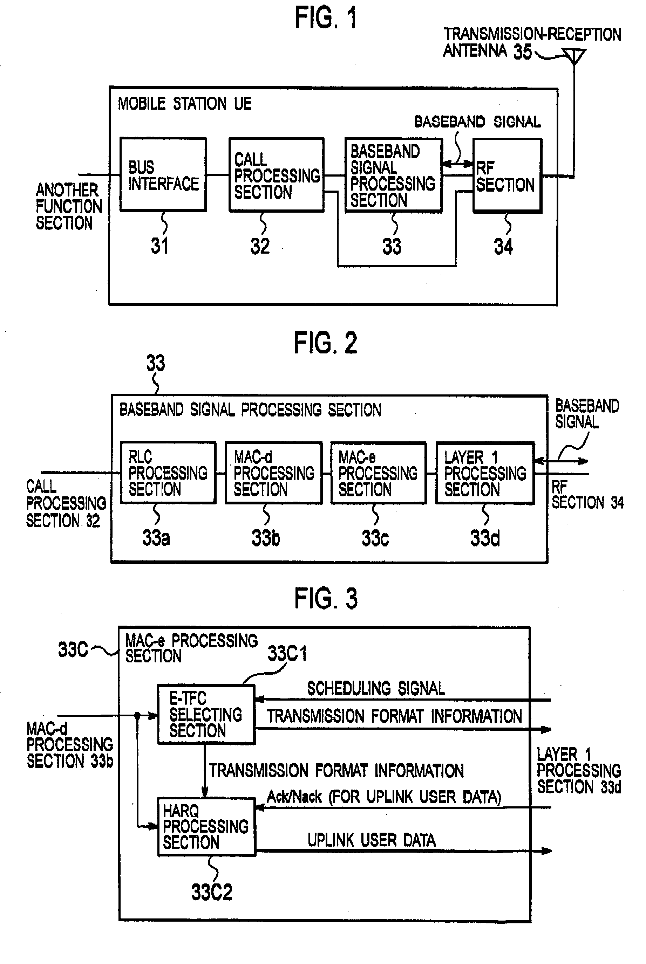

A description will be given of a configuration of a mobile communication system according to a first embodiment of the present invention with reference to Figs. 1 to 9.

It should be noted that, as shown in FIG. 10, the mobile communication system according to this embodiment is provided with a plurality of radio base stations Node B #1 to Node B #5 and a radio network controller RNC.

The mobile communication system according to the present embodiment is configured to raise a transmission rate of user data automatically up to the maximum allowable transmission rate. The transmission rate of the user data is transmitted through an uplink by a mobile station UE.

Further, the mobile communication system according to the present embodiment may set a transmission rate of user data transmitted from a mobile station through the uplink, as a maximum allowable transmission rate.

In addition, in the mobile communication system according to this embodiment, a "High Speed Downlink Packet Access (HSDPA)" is used in a downlink, and an "Enhanced Uplink (EUL)" is used in an uplink. It should be noted that in both of the HSDPA and the EUL, retransmission control (N process stop and wait) shall be performed by a "Hybrid Automatic Repeat Request (HARQ)".

Therefore, an Enhanced Dedicated Physical Channel, configured of an Enhanced Dedicated Physical Data Channel and an Enhanced Dedicated Physical Control Channel, and a Dedicated Physical Channel, configured of a Dedicated Physical Data Channel (DPDCH) and a Dedicated Physical Control Channel (DPCCH), are used in the uplink.

Here, the E-DPCCH transmits the EUL control data such as a transmission format number for defining a transmission format (transmission block size, or the like) of the E-DPDCH, HARQ related information (a number of retransmissions, or the like), and scheduling related Information (transmission power, buffer residence-volume, or the like in the mobile station UE).

In addition, the E-DPDCH is paired with the E-DPCCH, and transmits user data for the mobile station UE based on the EUL control data transmitted through the E-DPCCH.

The DPCCH transmits control data such as a pilot symbol used for RAKE combining, SIR measurement, or the like, a Transport Format Combination Indicator (TFCI) for identifying a transmission format of uplink DPDCH, and a transmission power control bit in a downlink.

In addition, the DPDCH is paired with the DPCCH, and transmits user data for the mobile station UE based on the control data transmitted through the DPCCH. However, if user data to be transmitted does not exist in the mobile station UE, the DPDCH can be configured not to be transmitted.

In addition, in the uplink, a "High Speed Dedicated Physical Control Channel (HS-DPCCH)", which is required when the HSPDA is applied, is also used.

The HS-DPCCH transmits a Channel Quality Indicator (CQI) measured in the downlink, and a transmission acknowledgement signal (Ack or Nack) for the HS-DPCCH.

As shown in FIG. 1, the mobile station UE according to this embodiment is provided with a bus interface 31, a call processing section 32, a baseband processing section 33, a radio frequency (RF) section 34, and a transmission - reception antenna 35.

However, these functions can be independently present as a hardware, and can be partly or entirely integrated, or can be configured through a process of software.

The bus interface 31 is configured to forward user data output from the call processing section 32 to another functional section (for example, an application related functional section). In addition, the bus interface 31 is configured to forward user data transmitted from another functional section (for example, the application related functional section) to the call processing section 32.

The call processing section 32 is configured to perform a call control processing for transmitting and receiving user data.

The baseband signal processing section 33 is configured to acquire user data by performing a layer-1 processing including a despreading processing, a RAKE combining processing, and a Forward Error Correction (FEC) decode processing, a Media Access Control (MAC) processing including a MAC-e processing and a MAC-d processing, and a Radio Link Control (RLC) processing against the baseband signals transmitted from the RF section 34, so as to transmit the acquired user data to the call processing section 32

In addition, the baseband signal processing section 33 is configured to generate baseband signals by performing an RLC processing, a MAC processing, or a layer-1 processing against the user data transmitted from the call processing section 32 so as to transmit the baseband signals to the RF section 34.

Detailed description of the functions of the baseband signal processing section 33 will be given later.

The RF section 34 is configured to generate baseband signals by performing the detection processing, the filtering processing, the quantization processing, or the like against radio frequency signals received through the transmission - reception antenna 35, so as to transmit the generated baseband signals to the baseband signal processing section 33.

In addition, the RF section 34 is configured to convert the baseband signals transmitted from the baseband signal processing section 33 to the radio frequency signals.

As shown in FIG. 2, the baseband signal processing section 33 is provided with an RLC processing section 33a, a MAC-d processing section 33b, a MAC-e processing section 33c, and a layer-1 processing section 33d.

The RLC processing section 33a is configured to perform a processing (RLC processing) of an upper layer of a layer-2 against user data transmitted from the call processing section 32 so as to transmit the user data to the MAC-d processing section 33b.

The MAC-d processing section 33b is configured to grant a channel identifier header based on a logical channel to which data is originated, so as to generate a transmission format in the uplink.

As shown in FIG. 3, the MAC-e processing section 33c is provided with an Enhanced Transport Format Combination (E-TFC) selecting section 33c1 and an HARQ processing section 33c2.

The E-TFC selecting section 33c1 is configured to determine a transmission format (E-TFC) of the E-DPDCH based on scheduling signals transmitted from the radio base station Node B.

In addition, the E-TFC selecting section 33c1 is configured to transmit transmission format information on the determined transmission format (a transmission data block size, a transmission power ratio between the E-DPDCH and the DPCCH, or the like) to the layer-1 processing section 33d, and to transmit the determined transmission format information to the HARQ processing section 33c2.

Here, the scheduling signals include such as an absolute value of the maximum allowable transmission rate of the user data at the mobile station UE, which is transmitted through an Absolute Grant Control Channel (AGCH) (for example, a maximum allowable transmission data block size, a maximum value of a transmission power ratio between the E-DPDCH and the DPCCH (maximum allowable transmission power ratio), or the like).

In this description, unless specified otherwise, it is assumed that the maximum allowable transmission rate includes a parameter related to the maximum allowable transmission rate.

Such scheduling signals are information notified in the cell where the mobile station UE is located, and include control information for all the mobile stations located in the cell, or a specific group of the mobile stations located in the cell.

The HARQ processing section 33c2 is configured to perform process control for the "stop-and-wait of N-process", so as to transmit the user data in the uplink, based on a transmission acknowledgement signal (Ack/ Nack for uplink data) transmitted from the radio base station Node B.

Specifically, the HARQ processing section 33c2 is configured to determine, based on the transmission acknowledgement signals (Ack/ Nack for the uplink) transmitted from the radio base station Node B, whether or not the reception processing of the uplink user data at the radio base station Node B has been successful.

When the transmission acknowledgement signal transmitted from the radio base station Node B to the HARQ processing is an "Ack" (reception processing of the uplink user data has been suacessful), the HARQ processing section 33c2 transmits new uplink user data at the HARQ processing.

Further, when the transmission acknowledgement signal transmitted from the radio base station Node B to the HARQ processing is a "NACK" (reception processing of the uplink user data has not been successful), the HARQ processing section 33c2 retransmits the uplink user data at the HARQ processing.

In addition, when the HARQ processing section 33c2 has not transmitted uplink user data for a predetermined period, the HARQ processing section 33c2 is configured to transmit transmission data blocks including outer loop transmission power control signals (MAC layer control information) in accordance with a transmission period notified from the radio network controller RNC (the predetermined transmission period), even when uplink user data to be transmitted does not exist.

It is assumed that the outer loop transmission power control signals include such as a status of the mobile station UE (for example, availability of the transmission power, a status of transmission buffer, or the like) or a CRC bit, or the like. Further, padding processing is performed against the transmission data blocks including the outer loop transmission power control signals, until the transmission data block reaches its minimum size.

The above-described transmission period is notified from the radio network controller RNC by such as an RRC message or the like, when the mobile station US sets a call or when the mobile station UE starts a soft handover.

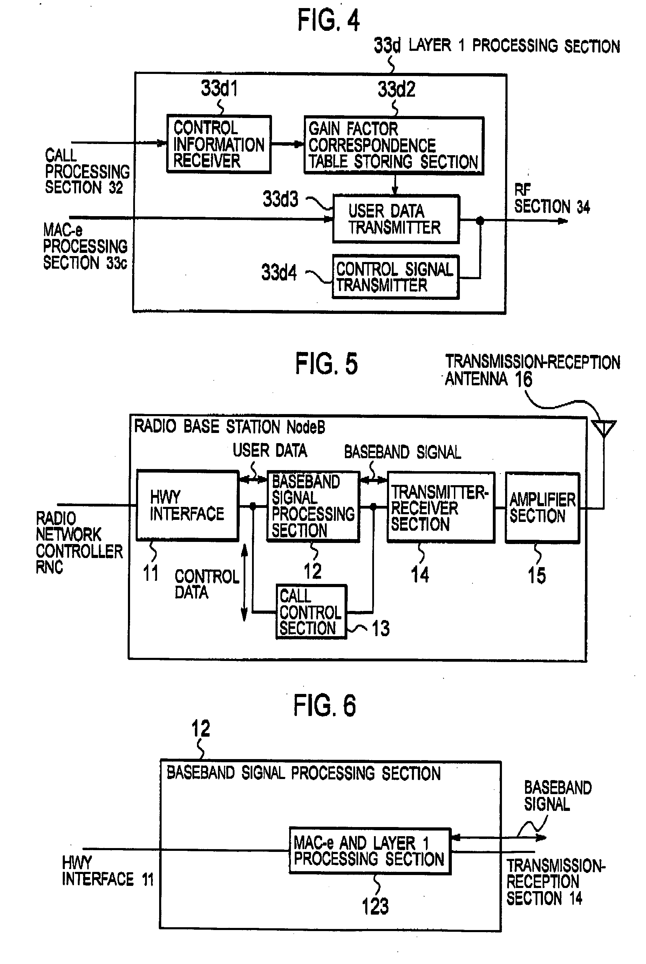

As shown in Fig. 4, the layer-1 processing section 33d includes a control information receiver 33d1, a gain factor correspondence table storing section 33d2, a user data transmitter 33d3, and a control signal transmitter 33d4.

The control information receiver 33d1 is configured to receive control information relating the layer-1 and the layer-2, from the radio network controller RNC through the call processing section 33d1.

The gain factor correspondence table storing section 33d2 is configured to extract, from the layer-2 related control information received at the control information receiver 33d1, a correspondence table showing correspondence between a transmission data block size of uplink user data and an EDCH transmission power ratio relating to the uplink user data, so as to store the extracted correspondence table.

The user data transmitter 33d8 is configured to transmit the uplink user data in accordance with the transmission power ratio (transmission rate) determined by using the correspondence table, which indicates correspondence between the transmission data block size and the EDCH transmission power ratio, and is stored in the gain factor correspondence table storing section 33d2.

In addition, the user data transmitter 33d8 is configured to transmit the transmission data blocks including outer loop transmission power control signals (MAC layer control information) by using the above transmission power ratio.

The control signal transmitter 33d4 is configured to control the transmission power of the E-DPCCH (uplink control channel) by using the transmission power offset determined and notified by the radio network controller RNC, and to transmit the E-DPCCH.

As shown in FIG 5, the radio base station Node B according to this embodiment is provided with an HWY interface 11, a baseband signal processing section 12, a call control section 13, at least one transmitter-receiver section 14, at least one amplifier section 15, and at least one transmission - reception antenna 16.

The HWY interface 11 is an interface with a radio network controller RNC. Specifically, the HWY interface 11 is configured to receive user data transmitted from the radio network controller RNC to a mobile station UE through a downlink, so as to enter the user data to the baseband signal processing section 12. In addition, the HWY interface 11 is configured to receive control data for the radio base station Node B from the radio network controller RNC, so as to enter the received control data to the call control section 13.

In addition, the HWY interface 11 is configured to acquire, from the baseband signal processing section 12, user data included in the uplink signals which are received from a mobile station UE through an uplink, so as to transmit the acquired user data to the radio network controller RNC. Further, the HWY interface 11 is configured to acquire control data for the radio network controller, RNC from the call control section 13, so as to transmit the acquired control data to the radio network controller RNC.

The baseband signal processing section 12 is configured to generate baseband signals by performing the MAC-e processing and the layer-1 processing against the user data acquired from the HWY interface 11, so as to forward the generated baseband signals to the transmitter-receiver section 14.

Here, the MAC processing in the downlink includes an HARQ processing, a scheduling processing, a transmission rate control processing, or the like. In addition, the layer-1 processing in the downlink includes a channel coding processing of user data, a spreading processing, or the like.

In addition, the baseband signal processing section 12 is configured to extract user data by performing the layer-1 processing and the MAC-e processing against the baseband signals acquired from the transmitter-receiver section 14, so as to forward the extracted user data to the HWY interface 11.

Here, the MAC-e processing in the uplink includes an HARQ processing, a scheduling processing, a transmission rate control processing, a header disposal processing, or the like. In addition, the layer-1 processing in the uplink includes a despreading processing, a RAKE combining processing, an error correction decode processing, or the like.

Detailed description of the functions of the baseband signal processing section 12 will be given later. In addition, the call control section 13 is configured to perform the call control processing based on the control data acquired from the HWY Interface 11.

The transmltter-recelver section 14 is configured to perform processing of converting baseband signals acquired from the baseband signal processing section 12, into radio frequency signals (downlink signals), so as to transmit the converted radio frequency signals to the amplifier section 15. In addition, the transmitter-receiver 14 is configured to perform processing of converting the radio frequency signals (uplink signals) acquired from the amplifier section 15, into the baseband signals, so as to transmit the converted baseband signals to the baseband signal processing section 12.

The amplifier section 15 is configured to amplify the downlink signals acquired from the transmitter-receiver section 14, so as to transmit the amplified downlink signals to the mobile station UE through the transmission - reception antenna 16. In addition, the amplifier 15 is configured to amplify the uplink signals received by the transmission - reception antenna 16, so as to transmit the amplified uplink signals to the transmitter-receiver section 14.

As shown in FIG. 6, the baseband signal processing section 12 is provided with a MAC-e and layer-1 processing section 123.

The MAC-e and layer-1 processing section 123 is configured to perform, against the baseband signals acquired from the transmitter-receiver section 14, a despreading processing, a RAKE combining processing, an error correction decode processing, an HARQ processing, or the like.

The MAC-d processing section 122 is configured to perform such as a header discard processing or the like, against output signals from the MAC-e and layer-1 processing section 123.

The RLC processing section 121 is configured to perform such as a retransmission control processing in the RLC layer, a reconstruction processing in an RLC-SDU or the like, against the output signals from the MAC-d processing section 122.

However, these functions are not clearly divided per hardware, and can be acquired by software.

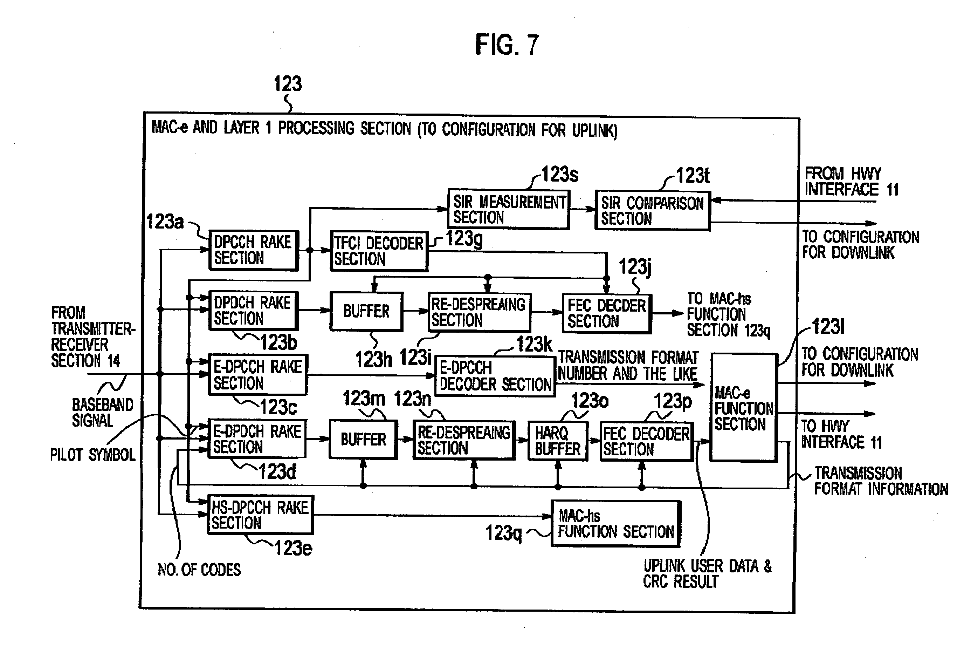

As shown in FIG. 7, the MAC-e and layer-1 processing section (configuration for the uplink) 123 is provided with a DPCCH RAKE section 123a. a DPDCH RAKE section 123b, an E-DPCCH RAKE section 123c, an E-DPDCH RAKE section 123d, an HS-DPCCH RAKE section 123e, a Transport Format Combination Indicator (TFCI) decoder section 123g, buffers 123h and 123m, re-despreading sections 123i and 123n, FEC decoder sections 123j and 123p, an E-DPCCH decoder section 123k, a MAC-e functional section 123l, an HARQ buffer 123o, a MAC-hs functional section 123q, an SIR measurement section 123s, and an SIR comparison section 123t.

The E-DPCCH RAKE section 123c is configured to perform, against the E-DPCCH in the baseband signals transmitted from the transmitter-receiver ecotion 14, the docpreading processing and the RAKE combining processing using a pilot symbol included in the DPCCH.

The E-DPCCH decoder section 123k is configured to acquire transmission format number related information, HARQ related information, scheduling related Information, or the like, by performing the decode processing against the RAKE combining outputs of the E-DPCCH RAKE section 123c, so as to enter the acquired information to the MAC-e functional section 123I.

The E-DPDCH RAKE section 123d is configured to perform, against the E-DPDCH in the baseband signals transmitted from the transmitter-receiver section 14, a despreading processing using the transmission format information (the number of codes) transmitted from the MAC-e functional section 123I and the RAKE combining processing using the pilot symbol included in the DPCCH.

The buffer 123m is configured to store the RAKE combining outputs of the E-DPDCH RAKE section 123d based on the transmission format information (the number of symbols) transmitted from the MAC-e functional section 123I.

The re-despreading section 123n is configured to perform a despreading processing against the RAKE combining outputs of the E-DPDCH RAKE section 123d stored in the buffer 123m, based on the transmission format information (a spreading factor) transmitted from the MAC-e functional section 123I.

The HARQ buffer 123o is configured to store the despreading processing outputs of the re-despreading section 123n, based on the transmission format information transmitted from the MAC-e functional section 123I.

The FEC decoder section 123p is configured to perform an error correction decoding processing (the FEC decoding processing) against the despreading processing outputs of the re-despreading section 123n, which is stored in the HARQ buffer 123o, based on the transmission format information (transmission data block size) transmitted from the MAC e functional eaction 123l.

The MAC-e functional section 123l is configured to calculate and output the transmission format information (the number of codes, the number of symbols, the spreading factor, the transmission data block size, and the like) based on the transmission format number related information, the HARQ related information, the scheduling related information, and the like, which are acquired from the E-DPCCH decoder section 123k.

The SIR measurement section123s is configured to measure a reception SIR by using the pilot portion included in the DPCCH.

The SIR comparison section 123t is configured to compare a target SIR notified from the radio network controller RNC through the HWY interface 11, with the measured reception SIR. Then, based on the comparison result, the SIR comparison section 123t instructs the downlink configuration of the baseband signal processing section 12 to transmit a "Down" command or an "Up" command through the downlink.

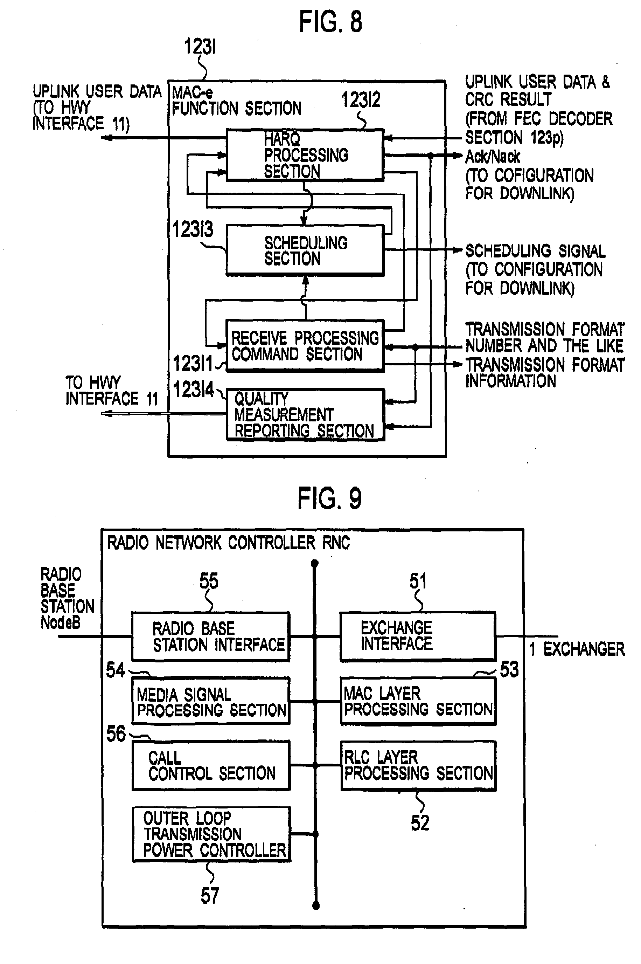

In addition, as shown In FIG. 8, the MAC-e functional section 123I is provided with a receive processing command section 123I1, an HARQ control section 123I2, and a scheduling section 123I3.

The receive processing command section 123I1 is configured to transmit the transmission format number related information, the HARQ related information, and the scheduling related information, which are entered from the E-DPCCH decoder section 123k, to the HARQ control section 12312.

in addition, the receive processing command section 12311 is configured to transmit, to the scheduling section 12313, the scheduling related information entered from the E-DPCCH decoder 123k.

Further, the receive processing command section 12311 is configured to output the transmission format information corresponding to the transmission format number entered from the E-DPCCH decoder section 123k.

The HARQ control section 123I2 is configured to determine whether or not the receive processing of uplink user data has been successful, based on the CRC result entered from the FEC decoder section 123p.

Then, the HARQ control section 123I2 is configured to generate a transmission acknowledgement signal (Ack or Nack), based on the determination result, so as to transmit the generated transmission acknowledgement signals to the configuration for the downlink of the baseband signal processing section 12.

In addition, the HARQ control section 123I2 is configured to transmit the uplink user data entered from the FEC decoder section 123p to the radio network controller RNC, when the above determination result has been "OK".

In addition, the HARQ control section 123I2 is configured to clear soft decision information stored in the HARQ buffer 123o when the above determination result is "OK".

On the other hand, when the above determination result is "NG", the HARQ control section 123I2 is configured to store the uplink user data in the HARQ buffer 123o, the uplink user data.

In addition, the HARQ control section 123I2 is configured to forward the above determination result to the receive processing command section 12311.

The receive processing control command section 123I1 is configured to notify the E-DPDCH RAKE section 123d and the buffer 123m of an hardware resource to be prepared for the following transmission time interval (TTI), so as to perform notification for reserving the resource in the HARQ buffer 123o.

In addition, when the uplink user data is stored in the buffer 123m, the receive processing command section 12311 is configured to instruct the HARQ buffer 123o and the FEC decoder section 123p to perform the FEC decoding processing after adding the uplink user data, which is stored in the HARQ buffer 123o, in a process corresponding to the TTI and a newly received uplink user data, per TTI.

In addition, the scheduling section 12313 is configured to instruct the configuration for the downlink of the baseband signal processing section 12 to notify the scheduling signals including the maximum allowable transmission rate (maximum allowable transmission data block size, maximum allowable transmission power ratio, or the like), based on radio resources in the uplink of the radio base station Node B, interference volume (noise rise) in the uplink, or the like.

To be more specific, the scheduling section 12313 is configured to determine the maximum allowable transmission rate based on scheduling related Information (radio resource in the uplink) transmitted from the E-DPCCH decoder section 123k so as to control the transmission rate of user data of the mobile station in communication.

Detailed descriptions of a control method based on the hardware resources and a control method based on the interference volume in the uplink will be given below.

In the control method based on the hardware resources, the scheduling section 123I3 is configured to notify the maximum allowable transmission rate through the AGCH to the mobile station UE connected to a cell under the control of the radio base station Node B.

When the transmission rate of user data in the mobile station UE connected to the cell under the control of the radio base station Node B increases and the hardware resources becomes insufficient, the scheduling section 123I3 lowers the maximum allowable transmission rate so that shortage of the hardware resources will not be caused.

On the other hand, when the hardware resources have spaces in such a case when the user data transmission in the mobile station UE connected to the cell under the control of the radio base station Node B is completed, or the like, the scheduling section 123I3 again increases the maximum allowable transmission rate.

In addition, In the control method based on the interference volume in the uplink, the scheduling section 123I3 is configured to notify the maximum allowable transmission rate through the AGCH to the mobile station UE connected to the cell under the control of the radio base station Node B.

When the transmission rate of user data in the mobile station UE connected to the cell under the control of the radio base station Node B increases and the interference volume (for example, the noise rise) in the uplink exceeds an allowable value (for example, the maximum allowable noise rise), the scheduling section 123I3 lowers the maximum allowable transmission rate so that the interference volume in the uplink can fall within a range of the allowable value (see, FIG.12).

On the other hand, when the interference volume (for example, the noise rise) in the uplink falls within the range of the allowable value (for example, the maximum allowable noise rise) and there is a space therein in the case when the user data transmission in the mobile station UE connected to the cell under the control of the radio base station Node B is completed, or the like, the scheduling section 12313 again increases the maximum allowable transmission rate (see, FIG 12).

The scheduling section 123I3 is configured to determine priority class for each logical channel used for transmitting uplink user data at the mobile station UE. Then, the scheduling section 12313 determines an absolute value of maximum allowable transmission rate of uplink user data for each priority class, so as to transmit scheduling signals to the downlink configuration of the baseband signal processing section 12. The scheduling signals include the absolute value of maximum allowable transmission rate for each priority class, and a priority class ID for identifying the priority class.

The radio network controller RNC according to the present embodiment is an apparatus located on upper level of the radio base station Node B and configured to control radio communication between the radio base station Node B and the mobile station UE.

As shown in FIG. 9, the radio network controller RNC according to this embodiment is provided with an exchange interface 51, a Radio Link Control (RLC) layer processing section 52, a MAC layer processing section 53, a media signal processing section 54, a radio base station interface 55, a call control section 56, and an outer loop transmission power controller 57.

The exchange interface 51 is an interface with an exchange 1. The exchange interface 51 is configured to forward the downlink signals transmitted from the exchange 1 to the RLC layer processing section 52, and to forward the uplink signals transmitted from the RLC layer processing section 52 to the exchange 1.

The RLC layer processing section 52 is configured to perform an RLC (Radio Link Control) sub-layer processing such as a synthesis processing of a header (e.g. a sequence number), a trailer, or the like.

The RLC layer processing section 52 is also configured to transmit the uplink signals to the exchange interface 51 and to transmit the downlink signals to the MAC layer processing section 53, after the RLC sub-layer processing is performed.

The MAC layer processing section 53 is configured to perform a MAC layer processing such as a priority control processing or a header granting processing.

The MAC layer proceeding section 53 is also configured to transmit the uplink signals to the RLC layer processing section 52 and to transmit the downlink signals to the radio base station interface 55 (or a media signal processing section 54), after the MAC layer processing is performed.

The media signal processing section 54 is configured to perform a media signal processing against voice signals or real time image signals.

The media signal processing section 54 is also configured to transmit the uplink signals to the MAC layer processing section 53 and to transmit the downlink signals to the radio base station interface 55, after the media signal processing is performed.

The radio base station interface 55 is an interface with the radio base station Node B. The radio base station interface 55 is configured to forward the uplink signals transmitted from the radio base station Node B to the MAC layer processing section 53 (or the media signal processing section 54) and to forward the downlink signals transmitted from the MAC layer processing section 53 (or the media signal processing section 54) to the radio base station Node B.

The call control section 56 is configured to perform a radio resource control processing, a channel setup and open processing by the layer-3 signaling, or the like. Here, the radio resource control processing includes a call admission control processing, a handover processing, or the like.

The outer loop transmission power controller 57 is configured to determine transmission period of the outer loop transmission power control signals so as to notify the determined transmission period to the mobile station UE.

For example, the outer loop transmission power controller 57 is configured to determine transmission period of the outer loop transmission power control signal based on status of the mobile station UE (whether or not the mobile station UE is in soft handover status, or the like) or congestion degree in the uplink (radio network), and to notify the determined transmission period to the mobile station UE.

Further, the outer loop transmission power controller 57 may determine the above-described transmission period when the mobile station UE sets a call (E-DCH) or when the mobile station UE starts a soft handover, and notify the determined transmission period to the mobile station UE.

The outer loop transmission power controller 57 may determine a transmission power offset (a transmission power ratio between the E-DPDCH and the DPCCH, or a gain factor) of the E-DPDCH (uplink control channel) based on the measurement result of the reception quality of the outer loop transmission power control signal (for example, the reception SIR) received through the E-DPDCH (uplink user data channel) notified from the radio base station Node B, so as to notify the determined transmission power offset to the mobile station UE.

Alternatively, the outer loop transmission power controller 57 may determine the transmission power offset (the transmission power ratio between the E-DPDCH and the DPCCH, or the gain factor) of the E-DPCCH (uplink control channel) based on the measurement result of the reception quality of the control signal (for example, the reception SIR) received through the E-DPCCH (uplink control channel) notified from the radio base station Node B, so as to notify the determined transmission power offset to the mobile station UE.

In addition, the outer loop transmission power controller 57 is configured to determine a target reception quality of the uplink user data channel (target SIR) based on the above-described measurement result, and to notify the determined result to the radio base station Node B.

For example, the outer loop transmission power controller 57 determines the target SIR or the gain factor based on the uplink user data received from the radio base station Node B, the CRC result, the number of retransmissions, or the like.

In other words, when the CRC result is "NG" and the number of retransmissions is large, the outer loop transmission power controller 57 either instructs the radio base station Node B to set the target SIR high, or instructs the radio base station Node B and the mobile station UE to set the gain factor high.

In addition, the outer loop transmission power controller 57 may use an RRC message so as to notify the above-described transmission period, target SIR, and transmission power offset, to the mobile station UE or to the radio base station Node B.

### (Modified Example 1)

The present invention is not limited to the above embodiment, and various modifications can be applied to the present invention.

According to the mobile communication system of the modified example 1, the above-described "function of determining transmission period of the outer loop transmission power control signals and notifying the determined transmission period to the mobile station (transmission period determining section)" is performed at such as Operation & Maintenance Terminal (OMT) connected to the radio base station Node B, an upper node, or the like, instead of the radio network controller RNC.

Further, according to the mobile communication system of the modified example 1, the above-described "function of determining the transmission power offset (the transmission power ratio between the E-DPDCH and the DPCCH, or the gain factor) of the E-DPDCH (uplink user data channel) based on the measurement result of the reception quality of the outer loop transmission power control signal (reception SIR) received through the E-DPDCH (uplink user data channel) notified from the radio base station Node B, and of notifying the determined transmission power offset to the mobile station UE (transmission power offset determining section)" is also performed at such as the above-described OMT, the upper node, or the like.

Further, according to the mobile communication system of the modified example 1, the above-described "function of determining the transmission power offset (the transmission power ratio between the E-DPDCH and the DPCCH, or the gain factor) of the E-DPDCH (uplink control channel) based on the measurement result of the reception quality of the control signal (reception SIR) received through the E-DOCCH (uplink control channel) notified from the radio base station Node B, and of notifying the determined transmission power offset to the mobile station UE (transmission power offset determining section)" is also performed at such as the above-described OMT, the upper node, or the like.

In addition, the mobile communication system according to the modified example 1, the above-described "function of determining a target reception quality of the uplink user data channel based on the measurement result (target reception quality determining section)" is performed at the above-described OMT, the upper node, or the like.

Although the present invention has been described in detail above with the embodiment, it is apparent to those skilled in the art that the present Invention is not limited to the embodiment described in the present application. The present invention can be implemented as altered and modified embodiments without departing from the spirit and scope of the present invention as defined by the description of claims. Therefore, the description of the present application is for illustrative purposes and is not intended to limit the present invention in any way.

### [Industrial Applicability]

As described above, the present invention can provide a transmission power control method and a mobile station that makes it possible to reduce deterioration in the radio network capacity on the E-DPCCH, by using the transmission power offset as small as possible while satisfying a quality of the E-DPCCH.

## Claims

1. A transmission power control method for controlling a transmission power of an uplink control channel at a mobile station, comprising:
measuring, at a radio base station, a reception quality or a control signal received through the uplink control channel;
notifying, at the radio base station, the measurement result to a radio network controller;
determining, at the radio network controller, a transmission power offset of the uplink control channel based on the measurement result, and notifying the determined transmission power offset to the mobile station; and
controlling, at the mobile station, the transmission power of the uplink control channel by using the transmission power offset.

2. A transmission power control method for controlling a transmission power of an uplink control channel at a mobile station, comprising;
determining a transmission period of an outer loop transmission power control signal, and notifying the determined transmission period to the mobile station;
transmitting, at the mobile station, the outer loop transmission power control signal in the determined transmission period through an uplink user data channel, even when uplink user data to be transmitted through the uplink user data channel does not exist;
measuring, at a radio base station, a reception quality of the outer loop transmission power control signal received through the uplink user data channel;
notifying, at the radio base station, the measurement result to a radio network controller,
determining, at the radio network controller, a transmission power offset of the uplink control channel based on the measurement result, and notifying the determined transmission power offset to the mobile station; and
controlling, at the mobile station, the transmission power of the uplink control channel by using the transmission power offset.

3. The transmission power control method according to claim 2, wherein the radio network controller determines the transmission period and notifies the determined transmission period to the mobile station.

4. The transmission power control method according to claim 2, wherein the radio network controller determines the transmission period when the mobile station sets a call or when the mobile station starts a soft handover, and notifies the determined transmission period to the mobile station.

5. The transmission power control method according to claim 2, wherein the transmission period is determined in accordance with a status of the mobile station or a congestion degree of a radio network.

6. A mobile station which transmits an uplink control channel, comprising:
an outer loop transmission power control signal transmitter configured to transmit an outer loop transmission power control signal through an uplink user data channel in a predetermined transmission period, even when uplink user data to be transmitted through the uplink user data channel does not exist; and
a transmission power controller configured to control a transmission power of the uplink control channel by using a transmission power offset determined by using the outer loop transmission power control signal.

7. The mobile station according to claim 6. wherein a radio network controller determines the predetermine transmission period and notifies the determined transmission period.

8. The mobile station according to claim 6, wherein the predetermined transmission period is notified when the mobile station sets a call or when the mobile station starts a soft handover.

9. A radio network controller used in a transmission power control method for controlling a transmission power of an uplink control channel at a mobile station, comprising:
a transmission power offset determining section configured to determine a transmission power offset of the uplink control channel based on a measurement result of a reception quality of a control signal received through the uplink control channel, the measurement result notified from a radio base station, and to notify the determined transmission power offset to the mobile station.

10. A radio network controller used in a transmission power control method for controlling a transmission power of an uplink control channel at a mobile station, comprising:
a transmission period determining section configured to determine a transmission period of an outer loop transmission power control signal, and to notify the determined transmission period to the mobile station; and
a transmission power offset determining section configured to determine a transmission power offset of the uplink control channel based on a measurement result of a reception quality of the outer loop transmission power control signal received through an uplink user data channel, the measurement result notified from a radio base station, and to notify the determined transmission power offset to the mobile station.

11. The radio network controller according to claim 10, wherein the transmission period determining section is configured to determine the transmission period when the mobile station sets a call or when the mobile station starts a soft handover, and to notify the determined transmission period to the mobile station.

12. The radio network controller according to claim 8, wherein the transmission period determining section is configured to determine the transmission period in accordance with a status of the mobile station or a congestion degree of a radio network, and to notify the determined transmission period to the mobile station.
